# EUROPÄISCHE PATENTANMELDUNG

(11) **EP 2 363 092 A1**
(43) Veröffentlichungstag der Anmeldung: **07.09.2011**
(21) Anmeldenummer: 10151537.7
(22) Anmeldetag: 25.01.2010
(51) Int. Cl.: A61C 1/08

(54) **Medizinische, insbesondere dentale, Behandlungsvorrichtung mit einem Dichtelement**

(71) Anmelder: W & H Dentalwerk Bürmoos GmbH, 5111 Bürmoos (AT)
(72) Erfinder: Lette, Andreas, 4050, Traun (AT); Mackinger, Rainer, 5121, Ostermiething (AT); Fuchs, Jürgen, 5112, Lamprechtshausen (AT); Petter, Hubert, 6330, Kufstein (AT)
(74) Vertreter: Benda, Ralf

(57) **Zusammenfassung**

Medizinische, insbesondere dentale, Behandlungsvorrichtung (1), umfassend eine in Drehung versetzbar Welle (2) und ein die Welle (2) umgebendes Dichtelement (3), das eine zentrale Bohrung (4), durch die sich die Welle (2) erstreckt, und einen die zentrale Bohrung (4) umgebenden Dichtkörper (5) mit einer ersten, der Welle (2) zugeordneten Dichtfläche (6) aufweist, wobei die erste Dichtfläche (6) derart relativ zur Welle (2) bewegbar ist, dass der Abstand zwischen der ersten Dichtfläche (6) und der Welle (2) veränderbar ist.

Es wird des Weiteren eine medizinische, insbesondere dentale, Behandlungsvorrichtung (1) offenbart, die umfasst: Ein Gehäuse (10) mit einer Außenseite, einer Innenseite und einem Hohlraum (22), in dem eine in Drehung versetzbare Welle (2) aufgenommen ist, und eine Vorrichtung (26) zum Leiten von Verunreinigungen aus dem Inneren des Hohlraums (22) an die Außenseite des Gehäuses (10), welche zumindest einen gewinkelt zum Hohlraum (22) angeordneten, das Gehäuse (10) durchsetzenden Kanal (18) aufweist.

## Beschreibung

Die vorliegende Erfindung betrifft eine medizinische, insbesondere dentale, Behandlungsvorrichtung mit einem Dichtelement und / oder mit einer Vorrichtung zum Leiten von Verunreinigungen aus dem Inneren der Behandlungsvorrichtung an dessen Außenseite.

Eine medizinische, insbesondere dentale, Behandlungsvorrichtung mit einem Dichtelement zum Abdichten einer rotierenden Welle ist aus der Patentanmeldung AT 500 520 A1 bekannt.

Aufgabe der vorliegenden Erfindung ist es, eine medizinische, insbesondere dentale, Behandlungsvorrichtung mit einem alternativen Dichtelement zu schaffen, das einen möglichst geringen Verschleiß aufweist, wobei insbesondere der Verschleiß oder Abrieb der der rotierenden Welle zugeordneten Dichtfläche gering gehalten werden soll.

Diese Aufgabe wird gemäß einem Ausführungsbeispiel durch eine medizinische, insbesondere dentale, Behandlungsvorrichtung gelöst, die eine in Drehung versetzbare Welle und ein die Welle umgebendes Dichtelement aufweist. Das Dichtelement hat eine zentrale Bohrung, durch die sich die Welle erstreckt, und einen die zentrale Bohrung umgebenden Dichtkörper mit einer ersten, der Welle zugeordneten Dichtfläche, wobei die erste Dichtfläche derart relativ zur Welle bewegbar ist, dass der Abstand zwischen der ersten Dichtfläche und der Welle veränderbar ist. Die erste, der Welle zugeordnete Dichtfläche dichtet insbesondere die Welle oder den die Welle umgebenden Hohlraum oder Freiraum ab.

Die Behandlungsvorrichtung eröffnet somit die Möglichkeit, abhängig vom potentiellen Verschleiß des Dichtelements bei unterschiedlichen Betriebszuständen der Behandlungsvorrichtung den Abstand zwischen der ersten Dichtfläche und der Welle zu verändern. So kann insbesondere in Betriebszuständen, in denen der potentielle Verschleiß für das Dichtelement besonders groß ist, der Abstand zwischen der ersten Dichtfläche und der Welle vergrößert werden. Gemäß einem bevorzugten Ausführungsbeispiel ist die erste Dichtfläche oder das gesamte Dichtelement derart relativ zur Welle bewegbar, dass der Abstand zwischen der ersten Dichtfläche und der Welle bei stillstehender Welle geringer ist als bei bewegter Welle, wobei besonders bevorzugt bei stillstehender Welle die erste Dichtfläche die Welle kontaktiert. Gemäß einem alternativen Ausführungsbeispiel ist die erste Dichtfläche oder das Dichtelement derart relativ zur Welle bewegbar, dass der Abstand zwischen der ersten Dichtfläche und der Welle bei einer niedrigen Drehzahl der Welle geringer ist als bei einer hohen Drehzahl der Welle, wobei besonders bevorzugt bei der niedrigen Drehzahl die erste Dichtfläche die Welle kontaktiert.

Die medizinische, insbesondere dentale, Behandlungsvorrichtung ist zum Beispiel als gerades, gebogenes, gewinkeltes oder pistolenförmiges Handstück oder Handgriffelement, als Teil eines Handstücks oder Handgriffelements, als Adapter, Zwischen- oder Verbindungsstück oder als Motor, insbesondere als Elektromotor oder Luftmotor, ausgebildet.

Gemäß einem Ausführungsbeispiel ist die erste Dichtfläche entlang einer Längsachse der Welle verschiebbar, wodurch eine besonders einfache Handhabung des Dichtelements erzielt wird, insbesondere wenn das Dichtelement durch ein mit der Behandlungsvorrichtung verbindbares Instrument bedienbar ist, wie dies im Folgenden noch detailliert beschrieben wird. Selbstverständlich ist es jedoch auch möglich die erste Dichtfläche in eine andere Richtung zu bewegen, um den Abstand zwischen der ersten Dichtfläche und der Welle zu variieren, zum Beispiel radial in Bezug auf die Längsachse der Welle.

Gemäß einem Ausführungsbeispiel ist das Dichtelement derart ausgebildet, dass die erste Dichtfläche durch den Anschluss eines Instruments an die Behandlungsvorrichtung und / oder durch das Lösen eines Instruments von der Behandlungsvorrichtung relativ zur Welle bewegbar ist. Damit wird eine automatische Einstellung des Abstands zwischen der Welle und der ersten Dichtfläche erzielt, was insbesondere dann von Vorteil ist, wenn durch den Anschluss oder durch das Lösen des Instruments ein Betriebszustand entsteht oder eingeleitet wird, bei dem ein potentiell erhöhter oder verringerter Verschleiß des Dichtelements vorliegt.

Gemäß einem anderen Ausführungsbeispiel weist das Dichtelement eine Stellvorrichtung zum Bewegen der ersten Dichtfläche auf. Bevorzugt ist zumindest ein Teil der Stellvorrichtung an einem Kupplungsabschnitt der Behandlungsvorrichtung oder anschließend an einen Kupplungsabschnitt der Behandlungsvorrichtung vorgesehen, an welchen ein mit der Behandlungsvorrichtung verbindbares Instrument kuppelbar ist, so dass die Stellvorrichtung durch das mit der Behandlungsvorrichtung verbindbare Instrument betätigbar ist. Besonders bevorzugt ist die Stellvorrichtung derart ausgebildet, dass durch das Verbinden des Instruments mit der Behandlungsvorrichtung der Abstand zwischen der ersten Dichtfläche und der Welle zunimmt und durch das Trennen des Instruments von der Behandlungsvorrichtung der Abstand zwischen der ersten Dichtfläche und der Welle abnimmt, insbesondere so weit abnimmt, dass die erste Dichtfläche die Welle berührt. Damit ist in vorteilhafter Weise eine Behandlungsvorrichtung geschaffen, bei der automatisch bei einem Betriebszustand oder vor Beginn eines Betriebszustands, bei dem der potentielle Verschleiß für das Dichtelement besonders groß ist, die erste Dichtfläche von der Welle wegbewegt wird, um so den Verschleiß des Dichtelements oder der ersten Dichtfläche zu verringern. Der Betriebszustand, bei dem der potentielle Verschleiß für das Dichtelement besonders groß ist, umfasst dabei insbesondere das in Rotation versetzen oder Rotieren der Welle, um damit das Instrument oder Teile davon anzutreiben.

Gemäß einem weiteren Ausführungsbeispiel sind das Dichtelement und die Stellvorrichtung von einem Gehäuse umgeben, wobei zumindest ein Teil der Stellvorrichtung, insbesondere zumindest ein Stellorgan der Stellvorrichtung, in eine das Gehäuse durchsetzende Bohrung ragt. Damit ist die Stellvorrichtung in vorteilhafter Weise von außerhalb des Gehäuses bedienbar, zum Beispiel durch ein mit der Behandlungsvorrichtung verbindbares Instrument, so wie es insbesondere im Vorherstehenden beschrieben ist.

Um eine zuverlässige Funktion des Dichtelements zu gewährleisten, weist die Stellvorrichtung gemäß einem Ausführungsbeispiel ein Federelement und / oder zumindest ein am Dichtkörper vorgesehenes Stellorgan auf. Das Federelement spannt das Dichtelement bevorzugt in einer ersten Stellung vor, in der der Abstand zwischen der ersten Dichtfläche und der Welle gering ist oder in der die erste Dichtfläche die Welle kontaktiert. Das Stellorgan dient zum Aufbringen einer der Federkraft entgegenwirkenden Kraft, um das Dichtelement bevorzugt in eine zweite Stellung zu bewegen, in der der Abstand zwischen der ersten Dichtfläche und der Welle größer ist als in der ersten Stellung.

Um eine besonders gute Dichtwirkung an der Welle zu erzielen, weist gemäß einem anderen Ausführungsbeispiel die Welle einen mit der ersten Dichtfläche des Dichtelements zusammenwirkenden Dichtabschnitt auf, wobei die erste Dichtfläche und der Dichtabschnitt insbesondere im Wesentlichen formkongruent oder formschlüssig ausgebildet sind. Bevorzugt sind die erste Dichtfläche und / oder der Dichtabschnitt stufenförmig oder als schiefe Ebene ausgebildet sind.

Zur weiteren Erhöhung der Dichtwirkung des Dichtelements umfasst der Dichtkörper gemäß einem Ausführungsbeispiel eine zweite Dichtfläche, die einem relativ zur Welle drehfesten Bauteil der Behandlungsvorrichtung zugeordnet ist. Die zweite Dichtfläche ist bevorzugt derart ausgebildet, dass sie das drehfeste Bauteil kontaktiert, insbesondere kontinuierlich und unabhängig vom Abstand zwischen der ersten Dichtfläche und der Welle. Besonders bevorzugt sind die erste Dichtfläche und die zweite Dichtfläche als voneinander getrennte Dichtlippen ausgebildet, die einer gemeinsamen Basis entspringen.

Gemäß einem anderen Ausführungsbeispiel weist der Dichtkörper einen metallischen Abschnitt oder einen Abschnitt aus Kunststoff auf, an dem die aus Gummi oder Kunststoff bestehende erste Dichtfläche und / oder zweite Dichtfläche befestigt ist. Bevorzugt ist an dem metallischen Abschnitt auch die Stellvorrichtung zum Bewegen des Dichtelements vorgesehen, die besonders bevorzugt zumindest teilweise aus Gummi oder Kunststoff besteht oder damit beschichtet ist. Derartige Dichtflächen oder Stellvorrichtungen aus Gummi oder Kunststoff werden zum Beispiel von der Firma Freundenberg Dichtungs- und Schwingungstechnik GmbH & Co.KG, Weinheim 7 Bergstraße, Deutschland hergestellt. Dieser Aufbau gewährleistet eine hohe Stabilität des Dichtelements bei gleichzeitig ausgezeichneter Dichtwirkung.

Gemäß einem weiteren Ausführungsbeispiel ist das Dichtelement von einem Gehäuse umgeben, das von zumindest einem Kanal durchsetzt ist, wobei der zumindest eine Kanal derart angeordnet ist, dass, insbesondere vom Dichtelement (aufgrund seiner Dichtwirkung) zurückgehaltene Verunreinigungen, wie zum Beispiel Partikel oder Flüssigkeiten, durch den zumindest einen Kanal vom Inneren des Gehäuses an die Außenseite des Gehäuses leitbar sind. Damit wird in vorteilhafter Weise ein Verstopfen des Dichtelements und des Raums um das Dichtelement oder das Ablagern von Partikel oder Flüssigkeiten verhindert. Der zumindest eine Kanal wirkt gemäß diesem Ausführungsbeispiel mit dem Dichtelement zusammen, um die Partikel oder Flüssigkeiten aus der Behandlungsvorrichtung zu leiten.

Um den Abtransport der Partikel und / oder der Flüssigkeit besonders effektiv zu gestalten, weist der Kanal gemäß einem Ausführungsbeispiel an der Innenseite des Gehäuses einen verbreiterten, insbesondere entlang der Längsachse der Welle verlängerten, Mündungsabschnitt auf.

Ein Kanal zum Ableiten von Partikeln und / oder einer Flüssigkeit aus einer Behandlungsvorrichtung kann gemäß einem eigenständigen erfinderischen Aspekt auch mit einem anderen als dem im Vorherstehenden beschriebenen Dichtelement verwendet oder kombiniert werden und mit diesem entsprechend zusammenwirken. Eine derartige Behandlungsvorrichtung umfasst ein Gehäuse, eine darin angeordnete und in Rotation versetzbare Welle, ein die Welle umgebendes (beliebiges) Dichtelement und zumindest einen Partikel und / oder eine Flüssigkeit aus der Behandlungsvorrichtung, insbesondere aus einem die Welle umgebenden Raum, leitenden, das Gehäuse durchsetzenden Kanal. Dieser Kanal kann bevorzugt alle im Vorherstehenden oder im Folgenden beschriebene Ausführungsformen, Anordnungen, Merkmale und / oder Eigenschaften aufweisen.

Gemäß einem weiteren eigenständigen erfinderischen Aspekt kann ein derartiger Kanal zum Ableiten von Partikeln und / oder einer Flüssigkeit aus einer Behandlungsvorrichtung auch ohne ein zusätzliches Dichtelement verwendet werden. Eine derartige Behandlungsvorrichtung umfasst ein Gehäuse, eine darin angeordnete und in Rotation versetzbare Welle und zumindest einen Partikel und / oder eine Flüssigkeit aus der Behandlungsvorrichtung, insbesondere aus einem die Welle umgebenden Raum, leitenden, das Gehäuse durchsetzenden Kanal. Dieser Kanal kann insbesondere alle im Vorherstehenden oder im Folgenden beschriebene Ausführungsformen, Anordnungen, Merkmale und / oder Eigenschaften aufweisen.

Die Erfindung wird nachfolgend anhand bevorzugter Ausführungsbeispiele und Bezug nehmend auf die beigefügten Zeichnungen erläutert:
Figur 1 zeigt in einer perspektivischen Außenansicht ein Ausführungsbeispiel einer medizinischen, insbesondere dentalen, Behandlungsvorrichtung mit einem erfindungsgemäßen Dichtelement.
Figur 2 zeigt einen Teil des Kupplungsabschnitts der Behandlungsvorrichtung der Figur 1.
Figur 3 zeigt eine Schnittdarstellung durch das instrumentenseitige Ende der Behandlungsvorrichtung der Figur 1 einschließlich des erfindungsgemäßen Dichtelements.
Figur 4 zeigt den in der Figur 3 mit "X" gekennzeichneten Ausschnitt in vergrößertem Maßstab.
Figur 5 zeigt in einer perspektivischen Ansicht eine Ausführungsform des erfindungsgemäßen Dichtelements.
Figur 6 zeigt eine Schnittdarstellung durch das Dichtelement der Figur 5.

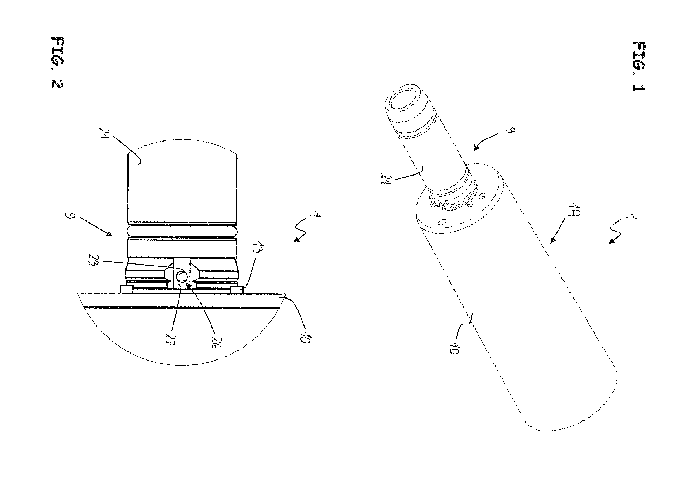

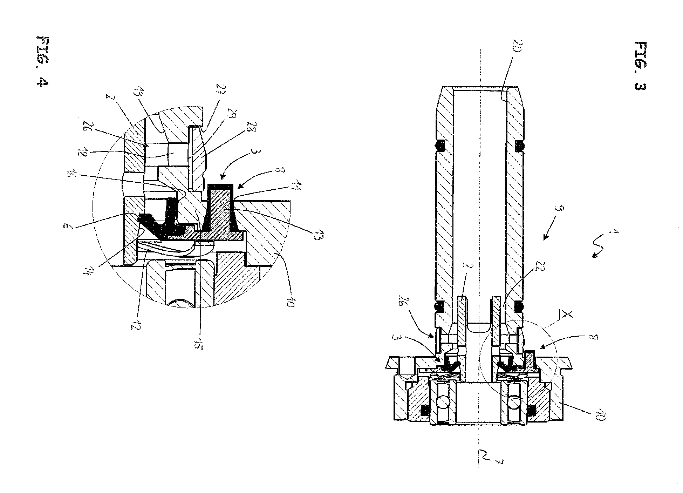

Die in Figur 1 dargestellte medizinische, insbesondere dentale, Behandlungsvorrichtung 1 umfasst einen Motor 1A mit einem Gehäuse 10, zum Beispiel einen Luftmotor oder einen Elektromotor, insbesondere einen bürstenlosen Mikroelektromotor. Im Inneren des Gehäuses 10 ist in bekannter Weise ein drehbarer Rotor vorgesehen, der eine in Drehung versetzbare Welle aufweist oder mit einer in Drehung versetzbaren Welle 2 (siehe Figur 3) verbunden ist.

Der länglich ausgebildete Motor 1A weist an einem Ende einen Anschluss an eine Energiequelle und an seinem gegenüber liegenden Ende einen Kupplungsabschnitt 9 zum Anschluss eines medizinischen, insbesondere dentalen, Instruments auf. Das Instrument ist zum Beispiel als Hand- oder Winkelstück ausgebildet und mit einem Werkzeug zur Behandlung einer Präparationsstelle verbindbar. Die in Drehung versetzbare Welle 2 überträgt die Antriebsbewegung des Rotors auf eine im Instrument angeordnete Welle, welche mit dem Werkzeug verbindbar ist und das Werkzeug in eine Arbeitsbewegung versetzt.

Der, bevorzugt als Teil einer Drehkupplung ausgebildete, Kupplungsabschnitt 9 umfasst unter anderem einen hohlen, mit einer Durchgangsbohrung 20 versehenen Kupplungszapfen 21, der in einem Kupplungsrohr des Instruments aufnehmbar ist. Die in Drehung versetzbare Welle 2 oder ein mit der Welle 2 verbundener Mitnehmer ragt in die Durchgangsbohrung 20. Der Mitnehmer bzw. die Welle 2 sind von der Innenwand des Kupplungszapfens 21 durch einen Zwischenraum oder Spalt 22, insbesondere einen Ringspalt, getrennt. Ist der Motor 1A mit dem Instrument verbunden, so besteht die Gefahr, dass Verunreinigungen oder Schmiermittel aus dem Instrument über die Kupplung in die Bohrung 20 des Kupplungszapfens 21, in den Ringspalt 22 und weiter in das Innere des Motors 1A gelangen und dort angeordnete Bauteile, wie zum Beispiel Lager, insbesondere Kugellager, elektronische oder elektrische Elemente, den Rotor etc. beschädigen.

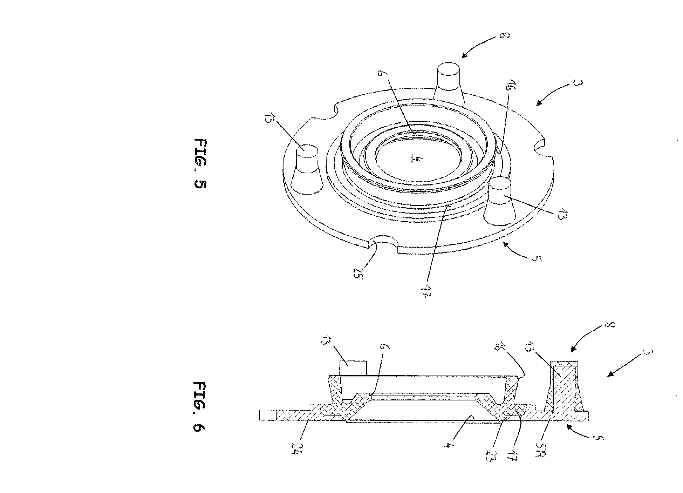

Um das Eindringen der Verunreinigungen zu verhindern, ist ein den Mitnehmer oder die Welle 2 umgebendes Dichtelement 3 vorgesehen, das die Welle 2 bzw. den Ringspalt 22 abdichtet und das insbesondere im Übergangsbereich zwischen dem Kupplungszapfen 21 und dem Gehäuse 10 angeordnet ist. Wie insbesondere aus den Figuren 5 und 6 zu erkennen ist, weist das Dichtelement 3 eine zentrale Bohrung 4 zur Aufnahme des Mitnehmers bzw. der Welle 2 und einen Dichtkörper 5 auf. Der Dichtkörper 5 weist zum Beispiel eine scheibenförmige Basis 24 mit einer Bohrung 23 und mehreren, insbesondere halbkreisförmigen, Einstichen 25 am Außenumfang auf. An dem Dichtkörper 5, insbesondere im Bereich der Bohrung 23, ist eine erste Dichtfläche 6 vorgesehen, die der Welle 2 zugeordnet ist.

Gemäß dem Ausführungsbeispiel der Figuren 5 und 6 ist die erste Dichtfläche 6 kreisförmig oder zylindrisch ausgebildet und begrenzt die zentrale Bohrung 4. Des Weiteren umgibt die erste Dichtfläche 6 die Welle 2, wobei sie bevorzugt und wie im Weiteren noch im Detail beschrieben die Welle 2 zumindest während bestimmter Betriebszustände der Behandlungsvorrichtung 1 berührt.

Gemäß dem in den Figuren 5 und 6 abgebildeten Ausführungsbeispiel umfasst der Dichtkörper 5 bevorzugt eine zweite Dichtfläche 16, die einem relativ zur Welle 2 drehfesten Bauteil 15, zum Beispiel dem Gehäuse 10 und / oder dem Kupplungszapfen 21 zugeordnet ist. Die zweite, ebenfalls kreisförmig oder zylindrisch ausgebildete Dichtfläche 16 umgibt die Welle 2, ist von dieser jedoch beabstandet.

Die beiden Dichtflächen 6, 16 entspringen bevorzugt einer gemeinsamen Basis 17. Besonders bevorzugt ist die erste Dichtfläche 6 als Teil einer ersten Dichtlippe und die zweite Dichtfläche 16 als Teil einer zweiten Dichtlippe ausgebildet, wobei sich die beiden Dichtlippen von der gemeinsamen Basis 17 erstrecken. Die lichte Weite der Bohrung 4 ist im Bereich der zweiten Dichtfläche 16 / der zweiten Dichtlippe größer als im Bereich der ersten Dichtfläche 6 / der ersten Dichtlippe. Die zweite Dichtfläche 16 / zweite Dichtlippe umgibt somit die erste Dichtfläche 6 / erste Dichtlippe.

Aus den Figuren 5 und 6 ist des Weiteren zu erkennen, dass die beiden Dichtflächen 6, 16 / die beiden Dichtlippen gewinkelt zueinander angeordnet sind, wobei die erste Dichtfläche 6 / erste Dichtlippe in Bezug auf die Längsachse 7 der Behandlungsvorrichtung 1 stärker geneigt ist als die zweite Dichtfläche 16 / zweite Dichtlippe. Bevorzugt überragt die zweite Dichtfläche 16 / zweite Dichtiippe die erste Dichtfläche 6 / erste Dichtlippe axial.

Gemäß dem Ausführungsbeispiel der Figuren 5 und 6 ist der Dichtkörper 5 zweiteilig aufgebaut, wobei er einen metallischen Abschnitt 5A, der insbesondere aus Stahl oder Stahllegierungen hergestellt ist, und einen aus Gummi oder Kunststoff bestehenden Abschnitt aufweist. Der aus Gummi oder Kunststoff bestehenden Abschnitt umfasst zumindest die beiden Dichtflächen 6, 16, bevorzugt auch die beiden Dichtlippen, besonders bevorzugt auch die gemeinsame Basis 17 der beiden Dichtflächen 6, 16. Der aus Gummi oder Kunststoff bestehende Abschnitt ist zum Beispiel auf den metallischen Abschnitt 5A vulkanisiert oder mit dem metallischen Abschnitt 5A spritzvergossen.

Um den Verschleiß oder Abrieb des Dichtelements 3, insbesondere der ersten Dichtfläche 6, zu verringern, ist das Dichtelement 3, insbesondere die erste Dichtfläche 6, derart in der Behandlungsvorrichtung 1 angeordnet, dass das Dichtelement 3, insbesondere die erste Dichtfläche 6, relativ zur Welle 2 bewegbar ist, um den Abstand zwischen der ersten Dichtfläche 6 und der Welle 2 zu verändern. Bevorzugt ist das Dichtelement 3, insbesondere die erste Dichtfläche 6, derart relativ zur Welle 2 bewegbar, dass der Abstand zwischen der ersten Dichtfläche 6 und der Welle 2 bei stillstehender Welle 2 geringer ist als bei bewegter Welle 2, wobei besonders bevorzugt bei stillstehender Welle 2 die erste Dichtfläche 6 die Welle 2 kontaktiert. Gemäß dem Ausführungsbeispiel der Figuren 3 und 4 sind das Dichtelement 3 bzw. die erste Dichtfläche 6 axial, entlang der Längsachse 7 der Behandlungsvorrichtung 1 verschiebbar.

Zum Bewegen des Dichtelements 3 / der ersten Dichtfläche 6 ist eine Stellvorrichtung 8 vorgesehen. Die Stellvorrichtung 8 umfasst zum Beispiel ein Federelement 12 und zumindest ein Stellorgan 13, das gemäß den Ausführungsbeispielen der Figuren 3 - 6 als Fortsatz oder zylindrischer Stift ausgebildet ist. Das Stellorgan 13 ist des Weiteren Teil des metallischen Abschnitts 5A des Dichtkörpers 5 oder entspringt der scheibenförmigen Basis 24 des Dichtkörpers 5. Bevorzugt sind mehrere Stellorgan 13 vorgesehen, zum Beispiel zwei bis fünf, bevorzugt drei, die im Wesentlichen gleichmäßig am Dichtkörper 5 angeordnet sind. Wie aus der Figur 6 zu erkennen ist, ist das zumindest ein Stellorgan 13 bevorzugt zumindest teilweise mit Gummi oder Kunststoff umhüllt. Das Federelement 12 ist zum Beispiel als Federscheibe oder als Blattfeder ausgebildet.

Wie insbesondere aus der Figur 4 zu erkennen ist, ragen die Stellorgane 13 in oder durch Bohrungen 11 des Gehäuses 10. Die Stellvorrichtung 8 und die Stellorgane 13 sind insbesondere im Bereich des Kupplungsabschnitts 9 angeordnet oder umgeben den Kupplungszapfen 21. Aufgrund dieser Anordnung ist die Stellvorrichtung 8 in vorteilhafter Weise durch ein an den Kupplungsabschnitt 9 anschließbares Instrument bedienbar und somit das Dichtelement 3 relativ zur Welle 2 verschiebbar: Wird das Instrument auf den Kupplungszapfen 21 aufgeschoben, so kontaktiert es das Stellorgan 13 und verschiebt es aus seiner in der Figur 4 dargestellten ersten Stellung oder Ausgangsstellung gemeinsam mit den beiden Dichtflächen 6, 16 axial, entlang der Längsachse 7 und entgegen der Federkraft des Federelements 12 in eine zweite, von der Ausgangsstellung unterschiedliche Stellung. Wird das Instrument vom Motor 1A gelöst und somit vom Kupplungszapfen 21 gezogen, so bewegt das kontrahierte Federelement 12, das an der dem Stellorgan 13 abgewandten Seite des Dichtkörpers 5 angeordnet ist, das gesamte Dichtelement 3 einschließlich der Stellvorrichtung 8 von der zweiten Stellung wieder in die in der Figur 4 dargestellte Ausgangsstellung.

Wie des Weiteren insbesondere aus der Figur 4 zu erkennen ist, berührt die erste Dichtfläche 6 den Dichtabschnitt 14 der Welle 2 in der Ausgangsstellung. Der Dichtabschnitt 14 der Welle 2 ist als schiefe Ebene ausgebildet, die in Richtung des Federelements 12 geneigt ist. Wird durch das Aufschieben des Instruments auf den Kupplungszapfen 21 die erste Dichtfläche 6 in die zweite Stellung bewegt, so sind die erste Dichtfläche 6 und die Welle 2 voneinander beabstandet. Kehrt die erste Dichtfläche 6 anschließend wieder in die Ausgangsstellung zurück, so berührt sie die Welle 2 wieder. In anderen Worten ist der Abstand zwischen der ersten Dichtfläche 6 und der Welle 2 in der Ausgangsstellung geringer als in der zweiten Stellung, insbesondere geht der Abstand in der Ausgangsstellung gegen null. In der zweiten Stellung beträgt der Abstand zwischen der ersten Dichtfläche 6 und der Welle 2 in etwa 0,1 - 2,0 mm, bevorzugt in etwa 0,2 - 1,0 mm. Die erste und die zweite Stellung stellen des Weiteren insbesondere unterschiedliche Betriebszustände der Behandlungsvorrichtung 1 dar oder werden bei unterschiedlichen Betriebszuständen der Behandlungsvorrichtung 1 eingenommen. Besonders bevorzugt umfasst die erste Stellung einen Betriebszustand, bei dem die Welle 2 nicht bewegt wird und / oder kein Instrument mit der Behandlungsvorrichtung 1 verbunden ist, und die zweite Stellung einen Betriebszustand, bei dem die Welle 2 zumindest zeitweise in Drehung versetzt wird und / oder ein Instrument mit der Behandlungsvorrichtung 1 verbunden ist.

Im Gegensatz zur ersten Dichtfläche 6 berührt die zweite Dichtfläche 16 das drehfeste Bauteil 15 im Wesentlichen kontinuierlich und unabhängig vom Abstand zwischen der ersten Dichtfläche 6 und der Welle 2 oder unabhängig, in welcher der oben genannten Stellung sich die erste Dichtfläche 6 befindet, oder unabhängig vom Betriebszustand der Behandlungsvorrichtung 1 oder unabhängig davon, ob ein Instrument an die Behandlungsvorrichtung 1 angeschlossen ist oder nicht. Die zweite Dichtfläche 16 bewegt sich somit unter im Wesentlichen ständigem Kontakt entlang der Oberfläche des drehfesten Bauteils 15.

In den Ausführungsbeispielen der Figuren 2 - 4 ist des Weiteren eine Vorrichtung 26 zum Leiten von Verunreinigungen aus dem Inneren der Behandlungsvorrichtung 1, insbesondere aus dem Kupplungszapfen 21, nach außen dargestellt. Bei dieser Vorrichtung 26 handelt es sich auch um einen von dem Dichtelement 3 unabhängigen erfinderischen Aspekt. Bevorzugt wird die Vorrichtung 26 jedoch gemeinsam mit einem Dichtelement zur Abdichtung einer rotierenden Welle und eines die rotierende Welle umgebenden Spalts oder Hohlraums, insbesondere mit dem Dichtelement 3, verwendet. Besonders bevorzugt wirken die Vorrichtung 26 zum Leiten von Verunreinigungen aus dem Inneren der Behandlungsvorrichtung 1 oder aus dem Inneren des hohlen Gehäuses 10 der Behandlungsvorrichtung 1 und das Dichtelement 3 derart zusammen, dass vom Dichtelement 3 zurückgehaltene Verunreinigungen durch die Vorrichtung 26 ableitbar sind.

Die Vorrichtung 26 zum Leiten von Verunreinigungen aus dem Inneren der Behandlungsvorrichtung 1 ist Teil einer medizinischen, insbesondere dentalen, Behandlungsvorrichtung 1, die ein Gehäuse 10 mit einer Außenseite, einer Innenseite und einem Hohlraum 22, in dem eine in Drehung versetzbare Welle 2 aufgenommen ist, umfasst. Die Welle 2 erstreckt sich durch den Hohlraum 22 entlang einer gemeinsamen Längsachse 7. Gemäß einem Ausführungsbeispiel weist die Vorrichtung 26 zum Leiten von Verunreinigungen aus dem Inneren der Behandlungsvorrichtung 1, insbesondere des Hohlraums 22, an die Außenseite des Gehäuses 10 zumindest einen gewinkelt zum Hohlraum 22 angeordneten, das Gehäuse 10 durchsetzenden Kanal 18 auf. Gemäß einem Ausführungsbeispiel verläuft zumindest ein Abschnitt des zumindest einen Kanals 18 radial zur Längsachse 7. Gemäß einem anderen Ausführungsbeispiel verläuft zumindest ein Abschnitt des zumindest einen Kanals 18 in einem Winkel von etwa 45° - 90° in Bezug auf die Längsachse 7.

Gemäß einem Ausführungsbeispiel verbindet der Kanal 18 die Innenseite mit der Außenseite des Gehäuses 10, um die Verunreinigungen zuverlässig aus dem Inneren des Gehäuses 10 oder aus dem die Welle 2 umgebenden Hohlraum 22, insbesondere aus dem Spalt zwischen der Welle 2 und der Innenseite des Gehäuses 10, zu entfernen.

Gemäß einem anderen Ausführungsbeispiel mündet der Kanal 18 in eine die Außenseite des Gehäuses 10 umgebende Nut oder Ringnut 27, in welcher die durch den Kanal 18 abtransportierten Verunreinigungen aufnehmbar sind. Bevorzugt ist die Nut 27 Teil einer Kupplungsvorrichtung 9 zur Verbindung der Behandlungsvorrichtung 1 mit einem medizinischen, insbesondere dentalen, Instrument, zum Beispiel einem Hand- oder Winkelstück. Besonders bevorzugt ist in der Nut ein Sprengring oder ein Federring 28 aufgenommen, der ein Teil der Kupplungsvorrichtung 9 ist und der die Öffnung 29 des zumindest einen Kanals 18 verdeckt.

Gemäß einem weiteren Ausführungsbeispiel ist der Kanal 18 zumindest teilweise an einem Kupplungsabschnitt 9 der Behandlungsvorrichtung 1 vorgesehen, wobei der Kupplungsabschnitt 9 bevorzugt einen zylinderförmigen Kupplungszapfen 21 umfasst. Da ein Großteil der Verunreinigungen über den Kupplungsabschnitt 9 in die Behandlungsvorrichtung 1 gelangt, ist es von besonderem Vorteil den Kanal 18 an dem Kupplungsabschnitt 9 anzuordnen, um dadurch das weitere Vordringen der Verunreinigungen in die Behandlungsvorrichtung 1 zu unterbinden.

Eine besonders effektive Ableitung der Verunreinigungen aus dem Gehäuse 10 wird gemäß einem Ausführungsbeispiel dadurch erzielt, das der Kanal 18 an seinem dem Hohlraum 22 zugewandten Ende, insbesondere an der Innenseite des Gehäuses 10, einen verbreiterten, insbesondere entlang der Längsachse 7 der Behandlungsvorrichtung 1 verlängerten, Mündungsabschnitt 19 aufweist. Besonders bevorzugt weist der Mündungsabschnitt 19 eine bezogen auf die Längsachse 7 geneigte, insbesondere in Richtung der Außenseite des Gehäuses 10 geneigte, Fläche auf.

Eine besonders effektive Sammlung und Ableitung der Verunreinigungen aus dem Gehäuse 10 wird gemäß einem anderen Ausführungsbeispiel durch ein die Welle 2 umgebendes, den Hohlraum 22 abdichtendes Dichtelement 3 erzielt, wobei insbesondere die Vorrichtung 26 zum Leiten von Verunreinigungen aus dem Inneren des Hohlraums 22 und das Dichtelement 3 derart zusammenwirken, dass vom Dichtelement 3 zurückgehaltene Verunreinigungen durch die Vorrichtung 26 ableitbar sind.

Gemäß einem weiteren Ausführungsbeispiel ist die Behandlungsvorrichtung 1 durch einen Motor, insbesondere durch einen Elektromotor oder durch einen Luftmotor, gebildet.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Medizinische, insbesondere dentale, Behandlungsvorrichtung (1), umfassend eine in Drehung versetzbar Welle (2) und ein die Welle (2) umgebendes Dichtelement (3), das eine zentrale Bohrung (4), durch die sich die Welle (2) erstreckt, und einen die zentrale Bohrung (4) umgebenden Dichtkörper (5) mit einer ersten, der Welle (2) zugeordneten Dichtfläche (6) aufweist, **dadurch gekennzeichnet, dass** die erste Dichtfläche (6) derart relativ zur Welle (2) bewegbar ist, dass der Abstand zwischen der ersten Dichtfläche (6) und der Welle (2) veränderbar ist.

2. Medizinische, insbesondere dentale, Behandlungsvorrichtung (1) nach Anspruch 1, **dadurch gekennzeichnet, dass**
das Dichtelement (3) derart ausgebildet ist, dass die erste Dichtfläche (6) durch den Anschluss eines Instruments an die Behandlungsvorrichtung (1) und / oder durch das Lösen eines Instruments von der Behandlungsvorrichtung (1) relativ zur Welle (2) bewegbar ist.

3. Medizinische, insbesondere dentale, Behandlungsvorrichtung (1) nach Anspruch 1 oder 2, **dadurch gekennzeichnet, dass**
die erste Dichtfläche (6) derart relativ zur Welle (2) bewegbar ist, dass der Abstand zwischen der ersten Dichtfläche (6) und der Welle (2) bei stillstehender Welle (2) geringer ist als bei bewegter Welle (2), wobei bevorzugt bei stillstehender Welle (2) die erste Dichtfläche (6) die Welle (2) kontaktiert.

4. Medizinische, insbesondere dentale, Behandlungsvorrichtung (1) nach einem der vorherstehenden Ansprüche, **dadurch gekennzeichnet, dass**
die erste Dichtfläche (6) entlang einer Längsachse (7) der Welle (2) verschiebbar ist.

5. Medizinische, insbesondere dentale, Behandlungsvorrichtung (1) nach einem der vorherstehenden Ansprüche, **gekennzeichnet durch**
eine Stellvorrichtung (8) zum Bewegen der ersten Dichtfläche (6), wobei die Stellvorrichtung (8) insbesondere ein Federelement (12) und / oder zumindest ein am Dichtkörper (5) vorgesehenes Stellorgan (13) aufweist.

6. Medizinische, insbesondere dentale, Behandlungsvorrichtung (1) nach Anspruch 5, **dadurch gekennzeichnet, dass**
zumindest ein Teil der Stellvorrichtung (8) an einem Kupplungsabschnitt (9) der Behandlungsvorrichtung (1) oder anschließend an einen Kupplungsabschnitt (9) der Behandlungsvorrichtung (1) vorgesehen ist, an welchen ein mit der Behandlungsvorrichtung (1) verbindbares Instrument kuppelbar ist, so dass die Stellvorrichtung (8) durch das mit der Behandlungsvorrichtung (1) verbindbare Instrument betätigbar ist.

7. Medizinische, insbesondere dentale, Behandlungsvorrichtung (1) nach Anspruch 5 oder 6, **dadurch gekennzeichnet, dass**
das Dichtelement (3) und die Stellvorrichtung (8) von einem Gehäuse (10) umgeben sind, wobei zumindest ein Teil der Stellvorrichtung (8) in eine das Gehäuse (10) durchsetzende Bohrung (11) ragt.

8. Medizinische, insbesondere dentale, Behandlungsvorrichtung (1) nach einem der vorherstehenden Ansprüche, **dadurch gekennzeichnet, dass**
die Welle (2) einen mit der ersten Dichtfläche (6) des Dichtelements (3) zusammenwirkenden Dichtabschnitt (14) aufweist, wobei die erste Dichtfläche (6) und der Dichtabschnitt (14) insbesondere im Wesentlichen formkongruent oder formschlüssig ausgebildet sind.

9. Medizinische, insbesondere dentale, Behandlungsvorrichtung (1) nach Anspruch 8, **dadurch gekennzeichnet, dass**
die erste Dichtfläche (6) und / oder der Dichtabschnitt (14) stufenförmig oder als schiefe Ebene ausgebildet sind.

10. Medizinische, insbesondere dentale, Behandlungsvorrichtung (1) nach einem der vorherstehenden Ansprüche, **dadurch gekennzeichnet, dass**
der Dichtkörper (5) eine zweite Dichtfläche (16) aufweist, die einem relativ zur Welle (2) drehfesten Bauteil (15) der Behandlungsvorrichtung (1) zugeordnet ist.

11. Medizinische, insbesondere dentale, Behandlungsvorrichtung (1) nach Anspruch 10, **dadurch gekennzeichnet, dass**
die zweite Dichtfläche (16) derart ausgebildet ist, dass sie das drehfeste Bauteil (15) kontaktiert, insbesondere im Wesentlichen kontinuierlich und unabhängig vom Abstand zwischen der ersten Dichtfläche (6) und der Welle (2).

12. Medizinische, insbesondere dentale, Behandlungsvorrichtung (1) nach Anspruch 10 oder 11, **dadurch gekennzeichnet, dass**
die erste Dichtfläche (6) und die zweite Dichtfläche (16) als voneinander getrennte Dichtlippen ausgebildet sind, die einer gemeinsamen Basis (17) entspringen.

13. Medizinische, insbesondere dentale, Behandlungsvorrichtung (1) nach einem der vorherstehenden Ansprüche, **dadurch gekennzeichnet, dass**
der Dichtkörper (5) einen metallischen Abschnitt (5A) aufweist, an dem die aus Gummi oder Kunststoff bestehende erste Dichtfläche (6) und / oder zweite Dichtfläche (16) befestigt ist und an dem bevorzugt auch die Stellvorrichtung (8) zum Bewegen des Dichtelements (3) vorgesehen ist.

14. Medizinische, insbesondere dentale, Behandlungsvorrichtung (1) nach einem der vorherstehenden Ansprüche, **dadurch gekennzeichnet, dass**
das Dichtelement (3) von einem Gehäuse (10) umgeben ist, das von zumindest einem Kanal (18) durchsetzt ist, wobei der zumindest eine Kanal (18) derart angeordnet ist, dass, insbesondere vom Dichtelement (3) zurückgehaltene, Partikel oder Flüssigkeiten durch den zumindest einen Kanal (18) vom Inneren des Gehäuses (10) an die Außenseite des Gehäuses (10) leitbar sind.

15. Medizinische, insbesondere dentale, Behandlungsvorrichtung (1) nach Anspruch 14, **dadurch gekennzeichnet, dass**
der Kanal (18) an der Innenseite des Gehäuses (10) einen verbreiterten, insbesondere entlang der Längsachse (7) der Welle (2) verlängerten, Mündungsabschnitt (19) aufweist.

16. Medizinische, insbesondere dentale, Behandlungsvorrichtung (1), umfassend ein Gehäuse (10) mit einer Außenseite, einer Innenseite und einem Hohlraum (22), in dem eine in Drehung versetzbare Welle (2) aufgenommen ist, oder medizinische, insbesondere dentale, Behandlungsvorrichtung (1) nach einem der vorherstehenden Ansprüche, **gekennzeichnet durch**
eine Vorrichtung (26) zum Leiten von Verunreinigungen aus dem Inneren des Hohlraums (22) an die Außenseite des Gehäuses (10), welche zumindest einen gewinkelt zum Hohlraum (22) angeordneten, das Gehäuse (10) durchsetzenden Kanal (18) aufweist.

17. Medizinische, insbesondere dentale, Behandlungsvorrichtung (1) nach Anspruch 16, **dadurch gekennzeichnet, dass**
der Kanal (18) die Innenseite mit der Außenseite des Gehäuses (10) verbindet.

18. Medizinische, insbesondere dentale, Behandlungsvorrichtung (1) nach Anspruch 16 oder 17, **dadurch gekennzeichnet, dass**
der Kanal (18) in eine die Außenseite des Gehäuses (10) umgebenden Nut oder Ringnut (27) mündet.

19. Medizinische, insbesondere dentale, Behandlungsvorrichtung (1) nach einem der Ansprüche 16 bis 18, **dadurch gekennzeichnet, dass**
der Kanal (18) zumindest teilweise an einem Kupplungsabschnitt (9) der Behandlungsvorrichtung (1) vorgesehen ist.

20. Medizinische, insbesondere dentale, Behandlungsvorrichtung (1) nach Anspruch 19, **dadurch gekennzeichnet, dass**
der Kupplungsabschnitt (9) einen zylinderförmigen Kupplungszapfen (21) umfasst.

21. Medizinische, insbesondere dentale, Behandlungsvorrichtung (1) nach einem der Ansprüche 16 - 20, **dadurch gekennzeichnet, dass**
der Kanal (18) an seinem dem Hohlraum (22) zugewandten Ende einen verbreiterten, insbesondere entlang der Längsachse (7) der Behandlungsvorrichtung (1) verlängerten, Mündungsabschnitt (19) aufweist.

22. Medizinische, insbesondere dentale, Behandlungsvorrichtung (1) nach Anspruch 21, **dadurch gekennzeichnet, dass**
der Mündungsabschnitt (19) eine bezogen auf die Längsachse (7) geneigte, insbesondere in Richtung der Außenseite des Gehäuses (10) geneigte, Fläche aufweist.

23. Medizinische, insbesondere dentale, Behandlungsvorrichtung (1) nach einem der Ansprüche 16 - 22, **gekennzeichnet durch**
ein die Welle (2) umgebendes, den Hohlraum (22) abdichtendes Dichtelement (3).

24. Medizinische, insbesondere dentale, Behandlungsvorrichtung (1) nach Anspruch 23, **dadurch gekennzeichnet, dass**
eine Vorrichtung (26) zum Leiten von Verunreinigungen aus dem Inneren des Hohlraums (22) und das Dichtelement (3) derart zusammenwirken, dass vom Dichtelement (3) zurückgehaltene Verunreinigungen durch die Vorrichtung (26) ableitbar sind.

25. Medizinische, insbesondere dentale, Behandlungsvorrichtung (1) nach einem der Ansprüche 16 - 24, **dadurch gekennzeichnet, dass**
die Behandlungsvorrichtung (1) durch einen Motor, insbesondere durch einen Elektromotor, gebildet ist.

## Geänderte Patentansprüche

### Geänderte Patentansprüche gemäss Regel 137(2) EPÜ.

**1.** Medizinische, insbesondere dentale, Behandlungsvorrichtung (1), umfassend eine in Drehung versetzbar Welle (2) und ein die Welle (2) umgebendes Dichtelement (3), das eine zentrale Bohrung (4), durch die sich die Welle (2) erstreckt, und einen die zentrale Bohrung (4) umgebenden Dichtkörper (5) mit einer ersten, der Welle (2) zugeordneten Dichtfläche (6) aufweist, wobei die erste Dichtfläche (6) derart relativ zur Welle (2) bewegbar ist, dass der Abstand zwischen der ersten Dichtfläche (6) und der Welle (2) veränderbar ist, **dadurch gekennzeichnet, dass**
das Dichtelement (3) derart ausgebildet ist, dass die erste Dichtfläche (6) durch den Anschluss eines Instruments an die Behandlungsvorrichtung (1) und / oder durch das Lösen eines Instruments von der Behandlungsvorrichtung (1) relativ zur Welle (2) bewegbar ist.

**2.** Medizinische, insbesondere dentale, Behandlungsvorrichtung (1) nach Anspruch 1, **dadurch gekennzeichnet, dass**
die erste Dichtfläche (6) derart relativ zur Welle (2) bewegbar ist, dass der Abstand zwischen der ersten Dichtfläche (6) und der Welle (2) bei stillstehender Welle (2) geringer ist als bei bewegter Welle (2), wobei bevorzugt bei stillstehender Welle (2) die erste Dichtfläche (6) die Welle (2) kontaktiert.

**3.** Medizinische, insbesondere dentale, Behandlungsvorrichtung (1) nach einem der vorherstehenden Ansprüche, **dadurch gekennzeichnet, dass**
die erste Dichtfläche (6) entlang einer Längsachse (7) der Welle (2) verschiebbar ist.

**4.** Medizinische, insbesondere dentale, Behandlungsvorrichtung (1) nach einem der vorherstehenden Ansprüche, **gekennzeichnet durch**
eine Stellvorrichtung (8) zum Bewegen der ersten Dichtfläche (6), wobei die Stellvorrichtung (8) insbesondere ein Federelement (12) und / oder zumindest ein am Dichtkörper (5) vorgesehenes Stellorgan (13) aufweist.

**5.** Medizinische, insbesondere dentale, Behandlungsvorrichtung (1) nach Anspruch 4, **dadurch gekennzeichnet, dass**
zumindest ein Teil der Stellvorrichtung (8) an einem Kupplungsabschnitt (9) der Behandlungsvorrichtung (1) oder anschließend an einen Kupplungsabschnitt (9) der Behandlungsvorrichtung (1) vorgesehen ist, an welchen ein mit der Behandlungsvorrichtung (1) verbindbares Instrument kuppelbar ist, so dass die Stellvorrichtung (8) durch das mit der Behandlungsvorrichtung (1) verbindbare Instrument betätigbar ist.

**6.** Medizinische, insbesondere dentale, Behandlungsvorrichtung (1) nach Anspruch 4 oder 5, **dadurch gekennzeichnet, dass**
das Dichtelement (3) und die Stellvorrichtung (8) von einem Gehäuse (10) umgeben sind, wobei zumindest ein Teil der Stellvorrichtung (8) in eine das Gehäuse (10) durchsetzende Bohrung (11) ragt.

**7.** Medizinische, insbesondere dentale, Behandlungsvorrichtung (1) nach einem der vorherstehenden Ansprüche, **dadurch gekennzeichnet, dass**
die Welle (2) einen mit der ersten Dichtfläche (6) des Dichtelements (3) zusammenwirkenden Dichtabschnitt (14) aufweist, wobei die erste Dichtfläche (6) und der Dichtabschnitt (14) insbesondere im Wesentlichen formkongruent oder formschlüssig ausgebildet sind.

**8.** Medizinische, insbesondere dentale, Behandlungsvorrichtung (1) nach Anspruch 7, **dadurch gekennzeichnet, dass**
die erste Dichtfläche (6) und / oder der Dichtabschnitt (14) stufenförmig oder als schiefe Ebene ausgebildet sind.

**9.** Medizinische, insbesondere dentale, Behandlungsvorrichtung (1) nach einem der vorherstehenden Ansprüche, **dadurch gekennzeichnet, dass**
der Dichtkörper (5) eine zweite Dichtfläche (16) aufweist, die einem relativ zur Welle (2) drehfesten Bauteil (15) der Behandlungsvorrichtung (1) zugeordnet ist.

**10.** Medizinische, insbesondere dentale, Behandlungsvorrichtung (1) nach Anspruch 9, **dadurch gekennzeichnet, dass**
die zweite Dichtfläche (16) derart ausgebildet ist, dass sie das drehfeste Bauteil (15) kontaktiert, insbesondere im Wesentlichen kontinuierlich und unabhängig vom Abstand zwischen der ersten Dichtfläche (6) und der Welle (2).

**11.** Medizinische, insbesondere dentale, Behandlungsvorrichtung (1) nach Anspruch 9 oder 10, **dadurch gekennzeichnet, dass**
die erste Dichtfläche (6) und die zweite Dichtfläche (16) als voneinander getrennte Dichtlippen ausgebildet sind, die einer gemeinsamen Basis (17) entspringen.

**12.** Medizinische, insbesondere dentale, Behandlungsvorrichtung (1) nach einem der vorherstehenden Ansprüche, **dadurch gekennzeichnet, dass**
der Dichtkörper (5) einen metallischen Abschnitt (5A) aufweist, an dem die aus Gummi oder Kunststoff bestehende erste Dichtfläche (6) und / oder zweite Dichtfläche (16) befestigt ist und an dem bevorzugt auch die Stellvorrichtung (8) zum Bewegen des Dichtelements (3) vorgesehen ist.

**13.** Medizinische, insbesondere dentale, Behandlungsvorrichtung (1) nach einem der vorherstehenden Ansprüche, **dadurch gekennzeichnet, dass**
das Dichtelement (3) von einem Gehäuse (10) umgeben ist, das von zumindest einem Kanal (18) durchsetzt ist, wobei der zumindest eine Kanal (18) derart angeordnet ist, dass, insbesondere vom Dichtelement (3) zurückgehaltene, Partikel oder Flüssigkeiten durch den zumindest einen Kanal (18) vom Inneren des Gehäuses (10) an die Außenseite des Gehäuses (10) leitbar sind.

**14.** Medizinische, insbesondere dentale, Behandlungsvorrichtung (1) nach Anspruch 13, **dadurch gekennzeichnet, dass**
der Kanal (18) an der Innenseite des Gehäuses (10) einen verbreiterten, insbesondere entlang der Längsachse (7) der Welle (2) verlängerten, Mündungsabschnitt (19) aufweist.

**15.** Medizinische, insbesondere dentale, Behandlungsvorrichtung (1) nach einem der vorherstehenden Ansprüche, **dadurch gekennzeichnet, dass**
die Behandlungsvorrichtung (1) als Adapter, Zwischen- oder Verbindungsstück oder als Motor, insbesondere als Elektromotor oder Luftmotor, ausgebildet ist.
